# EUROPÄISCHE PATENTSCHRIFT

(11) **EP 0 937 216 B1**
(45) Veröffentlichungstag und Bekanntmachung des Hinweises auf die Patenterteilung: **09.04.2003**
(21) Anmeldenummer: 97936679.6
(22) Anmeldetag: 30.07.1997
(51) Int. Cl.: F16J 9/06

(54) **DICHTPAKET**
PACKING SEAL
GARNITURE D'ETANCHEITE

(30) Priorität: 30.07.1996 DE 19630745
(43) Veröffentlichungstag der Anmeldung: 25.08.1999
(73) Patentinhaber: Helpap, Hans, 85652 Pliening (DE)
(72) Erfinder: Helpap, Hans, 85652 Pliening (DE)
(86) Internationale Anmeldenummer: EP9704154
(87) Internationale Veröffentlichungsnummer: WO98008009

(56) Entgegenhaltungen:
- WO-A-95/14184
- FR-A- 611 307
- GB-A- 226 719

## Beschreibung

Die Erfindung befaßt sich mit einem Dichtpaket, welches insbesondere für Hubkolbenmaschinen bestimmt ist, und welches vorzugsweise in eine umlaufende Nut eines Hubkolbens einer solchen Hubkolbenmaschine einlegbar ist.

Unter Bezugnahme auf Figur 2 der beiliegenden Zeichnung ist eine Dichtung in Form eines Dichtpakets gezeigt, welche aus WO 95/14184 bekannt ist. Das insgesamt mit 10 bezeichnete Dichtpaket umfaßt mindestens zwei, axial aneinanderliegende Segmentringe 1, welche jeweils mehrere Dichtsegmente 3 und ebenso viele Schloßsegmente 4 aufweisen. Die Dichtsegmente 3 und die Schloßsegmente 4 verjüngen sich hierbei entgegengesetzt radial nach innen bzw. nach außen in beiden Segmentringen 1 keilförmig. Diese Segmente sind innerhalb jedes Segmentringes 1 in abwechselnder Folge vorgesehen. Die Dichtsegmente 3 der mindestens zwei Segmentringe 1 überlappen einander wechselweise und mittels mindestens eines Federelements 2, wie eines Anlagefederrings, sind sie radial nach außen in Anlage an eine nicht gezeigte Zylinderwand beispielsweise einer Hubkolbenmaschine vorgespannt. Zwischen den mindestens zwei Segmentringen 1 ist eine Verdrehsicherung vorgesehen, welche von einer Bohrung 8 und einem Justierstift 9 gebildet wird. Die Bohrungen 8 durchsetzen zwei sich überlappende Dichtsegmente 3 der beiden axial aneinanderliegenden Segmentringe 1. Die in Verbindung mit den beiden Bohrungen 8 und dem Justierstift 9 gebildete Verdrehsicherung stellt sicher, daß die vorgegebene Überlappung der Dichtsegmente 3 bezüglich einander erhalten bleibt. Bei diesem bekannten Dichtpaket muß also ein Federelement 2, wie ein Anlegefederring, vorgesehen sein, welcher für die einwandfreie Funktionstüchtigkeit der als Dichtpaket ausgebildeten Dichtung verantwortlich ist. Dieses Federelement muß während der gesamten Gebrauchsdauer der Dichtung eine vorgegebene und in vorbestimmter Weise gerichtete Federkraft ausüben, obgleich das Federelement hohen und auch wechselnden Temperaturen ausgesetzt ist. Ferner muß die Federkraft so groß sein, daß auch bei der Einwirkung hoher Zünd- bzw. Verbrennungsdrücke die Schloßteile des direkt druckbeaufschlagten Segmentrings aus der Gesamtanordnung nicht herausgedrückt werden. Daher hat sich gezeigt, daß ein solches Federelement relativ dick ausgeführt werden muß, so daß man zur Aufnahme des gesamten Dichtpaketes große Nuttiefen benötigt. Solche große Nuttiefen können zu Schwingungsproblemen führen, die sich als Flattern bemerkbar machen, was insbesondere bei hochtourig laufenden Hochleistungsmotoren, zum Beispiel Rennmotoren, auftritt und auf Resonanzeffekte zurückzuführen ist. Insbesondere hat sich bei der vorstehend erläuterten bekannten Dichtung gezeigt, daß das funktionsnotwendige Federelement nicht nur einen Kostenaufwand hinsichtlich der Herstellung mit sich bringt, sondern insbesondere auch umfangreiche Abänderungen hinsichtlich der Aufnahme des Dichtungspaketes notwendig sind, sowie ein solches Federelement die Funktionstüchtigkeit der Dichtung dahingehend) beeinträchtigt, daß bei Verminderung der Rückstellrate des Federelements sich verändernde Krafterzeugungen und Kraftbeaufschlagungen dazu führen, daß - wenn auch nur kurzzeitig - ein unerwünschter erhöhter Gasdurchtritt möglich ist, welcher auch als "blow-by" bezeichnet wird. Hiermit ist natürlich eine Leistungseinbuße unvermeidbar verbunden.

Demgegenüber zielt die Erfindung darauf ab, ein Dichtpaket der gattungsgemäßen Art unter Überwindung der zuvor geschilderten Schwierigkeiten bereitzustellen, welches bei einem vereinfachten Aufbau in betriebszuverlässiger Weise eine Anlage der Dichtsegmente des Dichtpakets gewährleistet.

Nach der Erfindung wird hierzu ein Dichtpaket bereitgestellt, welches wenigstens zwei axial aneinanderliegende Segmentringe aufweist, die jeweils mindestens zwei Dichtsegmente und zur Vermeidung eines Aneinanderstoßens der Dichtsegmente abwechselnd dazwischen angeordnete Schloßsegmente aufweisen, wobei sich die Dichtsegmente und die Schloßsegmente wenigstens eines ersten Segmentrings entgegengesetzt radial nach innen bzw. außen keilförmig verjüngen und die Schloßsegmente gegenüber dem Dichtbereich der Dichtsegmente radial zurückgesetzt sind, und das Dichtpaket ferner eine zwischen den zumindest zwei Segmentringen wirkende Verdrehsicherung aufweist, wobei sich das Dichtpaket dadurch auszeichnet, daß sich die abwechselnden Schloß- und Dichtsegmente des wenigstens einen weiteren Segmentrings beide radial nach innen verjüngen, sich die Schloßsegmente über einen wesentlich größeren Bogenbereich als die Dichtsegmente erstrecken, und daß die Dichtsegmente dieses weiteren Segmentrings nur die Schloßsegmente des axial angrenzenden ersten Segmentrings des Dichtpakets überdecken.

Bei dem erfindungsgemäßen Dichtpaket kann somit ein als Anlegefeder wirkendes Federelement ersatzlos entfallen, so daß die bisher in diesem Zusammenhang bestehenden möglichen Beeinträchtigungen des bekannten Dichtpakets sich in effektiver Weise ausschalten lassen. Auch vereinfacht sich hierdurch die Herstellung des Dichtpakets und der Aufbau desselben, da man kein zusätzliches Teil, wie die funktionsnotwendige Anlagefeder benötigt. Bei dem erfindungsgemäßen Dichtpaket wird diese Schließfunktion der Dichtgrenzen sowie eine zuverlässige Anlage der Dichtsegmente an den zugeordneten Dichtgegenflächen durch die neuartige Auslegung des wenigstens einen weiteren Segmentrings übernommen. Bei diesem weiteren Segmentring ist die Auslegung im Gegensatz zu der eingangs erläuterten üblichen Auslegungsform derart getroffen, daß die abwechselnd angeordneten Dichtsegmente und Schloßsegmente sich nicht entgegengesetzt zueinander verjüngen, sondern daß sich beide radial nach innen verjüngen. Da sich ferner das jeweilige Schloßsegment dieses weiteren Segmentrings über einen größeren Bogenbereich als die zugeordneten Dichtsegmente erstreckt, ergeben sich bei einer Arbeitsdruckbeaufschlagung dieses weiteren Segmentrings immer in zuverlässiger Weise solche Wirkkraftverhältnisse, daß die Dichtsegmente zuverlässig in Richtung der zu schließenden Dichtgrenze gedrückt werden, so daß in jedem Betriebszustand und Arbeitszustand sich die Dichtsegmente des nach der Erfindung wesentlichen weiteren Segmentrings zuverlässig, zwangsläufig und automatisch in Richtung zu der Gegendichtfläche bewegen, und in dieser Richtung mit einer Druckkraft zur Erzeugung des Anlagedrucks gegen die Gegendichtfläche beaufschlagt werden. Da ferner die jeweiligen Dichtsegmente des druckbeaufschlagten weiteren Segmentrings die jeweiligen Schloßsegmente des axial angrenzenden ersten Segmentrings abdecken, reicht der Druck im Nutgrund der zum Einlegen des Dichtpakets bestimmten Nut aus, um die Schloßsegmente des ersten Segmentrings mit der Wirkrichtung nach außen gerichtet derart zu beaufschlagen, daß der Segmentringverbund dieses ersten Segmentrings aufrechterhalten wird. Somit ist ein zuverlässiges Zusammenarbeiten der wenigstens zwei Segmentringe in einer solchen Weise sichergestellt, daß allein in Abhängigkeit von dem jeweiligen Betriebsdruck oder Arbeitsdruck die Dichtsegmente der wenigstens zwei axial aneinandergrenzenden Segmentringe zuverlässig und unverzögert zur Anlage an der Gegendichtfläche unter Einwirkung eines Anlagedrucks derart gebracht werden, daß die Dichtgrenzen zuverlässig geschlossen sind und ein Gasdurchtritt in effizienter Weise verhindert wird.

Wie sich aus den vorstehenden Ausführungen ersehen läßt, schafft die vorliegende Erfindung somit sogar unter Verminderung des Konstruktionsaufwandes und unter Verminderung der Anzahl von Teilen des Dichtpakets eine wirksame Abhilfe für die möglichen Probleme eines erhöhten Gasdurchtritts, das heißt eines sogenannten blow-by. Somit verhindert das erfindungsgemäße Dichtpaket ein Aufbrechen der Dichtgrenzen an den Segmentringen unter Nutzung der im Arbeitszustand der Maschine vorhandenen Arbeitsdrücke, so daß der Anlagevorgang der Dichtsegmente selbstgesteuert durch den Arbeitsdruck in der jeweils gewünschten Weise zuverlässig ohne zusätzliche Hilfsmittel ausgeführt wird. Dies ist in überraschender Weise dadurch möglich, daß man die Verjüngungsrichtung der Schloßsegmente und der Dichtsegmente des nach der Erfindung wesentlichen weiteren Segmentrings einerseits gleichgerichtet wählt, und andererseits derart, daß sie radial nach innen beispielsweise in Richtung auf die Kolbenachse gerichtet ist. Durch diese Auslegung erhält man in einem vorbestimmten Winkelbereich Berührungs- oder Gleitflächen zwischen den aneinanderstoßenden Schloßsegmenten und Dichtsegmenten dieses weiteren Segmentrings, welche sowohl eine keilförmige Erweiterung radial nach außen für das jeweilige Schloßsegment als auch für das jeweilige Dichtsegment zulassen, ohne daß eine Klemmgefahr an diesen Berührungs- oder Gleitflächen besteht. Da sich das Schloßsegment über einen größeren Bogenbereich als die Dichtsegmente erstreckt, hat das jeweilige Schloßsegment eine größere druckbeaufschlagte Teilfläche als das jeweilige Dichtsegment, wodurch die Bewegung der jeweiligen Dichtsegmente in Richtung der Gegendichtfläche nicht nur ermöglicht wird, sondern sich auch eine resultierende Wirkkraft ergibt, welche die jeweiligen Dichtsegmente gegen die entsprechende Gegendichtfläche mit einer vorbestimmten Andrückkraft zur Erzielung eines dichten Abschlusses andrückt, wobei diese resultierende Wirkkraft von den Bogenbereichsverhältnissen von Schloßsegmenten und Dichtsegmenten bei dem nach der Erfindung wesentlichen weiteren Segmentring abhängig ist. Da in Abhängigkeit von der Teilung des ersten Segmentrings aber meist eine relativ kleine Bogenerstreckung für die Dichtsegmente des weiteren Segmentrings in einer solchen Weise ausreicht, daß die Schloßsegmente des ersten Segmentrings zuverlässig überdeckt sind, kann der Bogenerstreckungsbereich der jeweiligen Schloßsegmente des weiteren Segmentrings relativ groß gewählt werden, so daß eine ausreichende resultierende Wirkkraft für das Andrücken der Dichtsegmente gegen die Gegendichtfläche erzeugt wird.

Vorzugsweise wird bei dem Dichtpaket mit dem vorstehend umrissenen Aufbau die Verdrehsicherung derart ausgebildet, daß sie eine Zusammenwirkungsverbindung mit wenigstens einem Schloßteil des weiteren Segmentrings und einem Dichtsegment des ersten Segmentrings herstellt. Vorzugsweise umfaßt die Verdrehsicherung ein Justierelement, wie einen Justierstift, welches durch eine Bohrung im Schloßsegment des weiteren Segmentrings geht und mit einer Ausnehmung an dem Dichtsegment des axial angrenzenden ersten Segmentrings zusammenarbeitet. Durch eine derartige Verdrehsicherung wird sichergestellt, daß die wenigstens zwei axial aneinanderliegenden Segmentringe des Dichtpakets nach der Erfindung in der jeweiligen vorbestimmten lagemäßigen Zuordnung bleiben, so daß eine Relativbewegung der wenigstens zwei Segmentringe zueinander wirksam vermieden wird. Durch die bei dem erfindungsgemäßen Dichtpaket vorhandenen aufgelösten Dichtgrenzen wird somit ein Flattern des Dichtpakets verhindert. Vorzugsweise geht die Ausnehmung der Verdrehsicherung bei dem Dichtsegment des ersten Segmentrings von dessen Innenumfang aus, so daß eine ungehinderte Bewegung der Dichtsegmente des ersten Segmentrings in Richtung radial nach außen sichergestellt ist.

Gemäß einer bevorzugten Ausführungsform umfaßt jeder Segmentring vier Schloßsegmente und vier Dichtsegmente und bei einer solchen Auslegungsform beträgt der Verjüngungswinkel der Segmente des nach der Erfindung wesentlichen weiteren Segmentrings etwa 45°. Hierdurch erhält man eine betriebszuverlässig arbeitende Auslegung des Dichtpakets, welches sich kostengünstig fertigen und herstellen läßt. Natürlich ist die Erfindung nicht auf diese bevorzugte Anzahl von Segmentringen und Schloßsegmenten beschränkt, sondern diese Anzahl hängt auch von den Abmessungen und den Größen der jeweiligen Segmentringe ab.

Gemäß einer bevorzugten Ausführungsform ist wenigstens eine Sicherungseinrichtung für den Verbund des Dichtpakets vorgesehen, welche insbesondere eine Bewegung der Segmentringe des Dichtpakets in axialer Richtung begrenzt. Sowohl thermisch bedingt als auch montagebedingt ist zwischen dem eingelegten Dichtpaket und der Radialfläche der zugeordneten Nut beispielsweise im Kolben unvermeidbar ein Zwischenraum bzw. Spalt vorhanden. Da auf die Dichtsegmente der Segmentringe im Anlagezustand gegen die Gegendichtfläche, wie die Zylinderwand, Reibkräfte auftreten, besteht aufgrund des vorhandenen axialen Spiels oder Spalts die Gefahr, daß sich die Dichtsegmente der jeweiligen Segmentringe aufgrund der einwirkenden Kräfte kippen können. Hierdurch besteht die Gefahr, daß der Dichtgrenzenverbund des Dichtpakets im Betriebszustand auflösen kann. Mit Hilfe der nach der Erfindung vorgesehenen Sicherungseinrichtung wird die axiale Beweglichkeit des Dichtpakets im eingebauten Zustand begrenzt, und zwar vorzugsweise dadurch, daß der für eine derartige Kippbewegung zur Verfügung stehende Weg in axialer Richtung so klein wie möglich gemacht wird. Die Sicherungseinrichtung ist hierbei vorzugsweise derart ausgelegt, daß sie arbeitsdruckabhängig den zum Einlegen des Dichtpakets erforderlichen Montagespalt insbesondere in axialer Richtung zu verkleinern sucht. Insbesondere umfaßt die Sicherungseinrichtung wenigstens ein sich radial zum Dichtpaket bewegliches Element. Die Gestalt desselben ist an sich weitgehend frei wählbar, aber es hat sich gezeigt, daß man insbesondere günstige Verhältnisse erhält, wenn die Sicherungseinrichtung keilförmig in Richtung der Kolbenachse ausgebildet ist. Durch eine solche Auslegung wird die Bewegungsmöglichkeit des Dichtpakets in radialer und/oder axialer Richtung begrenzt und eingeschränkt, und zwar in einer solchen Weise, daß in Abhängigkeit von dem Arbeitsdruck, welcher auch auf die Sicherungseinrichtung wirkt, die Sicherungseinrichtung mehr oder weniger in radialer Richtung bezüglich des eingelegten Dichtpakets bewegt wird.

Um diesen Axialbewegungs-Begrenzungseffekt möglichst vollumfänglich auszunutzen, kann die Sicherungseinrichtung vorzugsweise ringförmig ausgebildet sein, und sie kann gegebenenfalls in Segmente unterteilt sein.

Um die auf das Dichtpaket wirkende axiale Anpreßkraft der Sicherungseinrichtung möglichst gering zu halten, ist die dem Dichtpaket zugewandte Anlagefläche der Sicherungseinrichtung zur axialgerichteten Druckentlastung reduziert. Hierzu kann diese Anlagefläche Oberflächenunterbrechungen, wie Ausnehmungen, Entlastungsnuten oder dergleichen, haben. Die Wahl dieser Druckentlastungseinrichtungen hängt insbesondere auch von der Bauform der Sicherungseinrichtung ab, so daß diesbezüglich nur ganz allgemein die Lehre gegeben werden kann, diese axial wirkenden Anpreßkräfte auf das Dichtpaket möglichst weit ohne Beeinträchtigung der Funktionstüchtigkeit des Dichtpakets herabzusetzen.

Ferner hat bei der erfindungsgemäßen Auslegung die Sicherungseinrichtung zugleich auch noch eine weitere Funktion, welche darin zu sehen ist, den radial gerichteten Wirkdruck auf das Dichtpaket im Nutgrund herabzusetzen. Hierdurch lassen sich die Anpreßkräfte herabsetzen, mit denen die Dichtsegmente der Segmentringe beispielsweise gegen die Zylinderwand zur Abdichtung gedrückt werden, wodurch sich nicht nur der Verschleiß reduzieren läßt, sondern sich auch eine verminderte Verlustreibung an den Dichtbereichen ergibt, was wiederum dazu führt, daß man höhere Leistungswerte erzielen kann.

Als besonders zweckmäßig hat es sich erwiesen, daß die Sicherungseinrichtung den Durchströmungsquerschnitt zum Nutgrund verkleinert, so daß man durch konstruktive Maßnahmen den Druckaufbau im Nutgrund beeinflussen und vorbestimmen kann, um eine zuverlässige, langfristige Funktionsfähigkeit des Dichtpakets sicherzustellen.

Mit Hilfe der in bevorzugter Weise nach der Erfindung vorgesehenen Sicherungseinrichtung wird also einerseits ein unerwünschtes Kippen der Segmente der Segmentringe oder eine unerwünschte Bewegung derselben in axialer Richtung wenn nicht verhindert, so doch stark eingegrenzt, so daß in stabiler und zuverlässiger Weise der Dichtgrenzenverbund des Dichtpakets in allen Betriebszuständen erhalten bleibt. Zusätzlich kann dann mit Hilfe einer solchen Sicherungseinrichtung auch eine leistungssteigernde Auslegung erreicht werden, wenn man nämlich mit Hilfe dieser Sicherungseinrichtung auf konstruktive Weise Einfluß auf den Durchströmungsquerschnitt an der Sicherungseinrichtung zum Nutgrund hin nimmt, und zwar so, daß nicht nur eine Druckentlastung in axialer Richtung zum Dichtpaket verwirklicht wird, sondern auch der Druckaufbau im Nutgrund derart beeinflußt wird, daß zwar eine ausreichende Beaufschlagung zur Bewegung der Dichtsegmente der Segmentringe in axialer Richtung nach außen wirkend vorhanden ist, hierzu aber nicht der im wesentlichen vollständige Arbeitsdruck im Arbeitsraum genutzt wird, sondern der hieraus im Nutgrund wirkende resultierende Druck in vorbestimmter Weise vermindert wird, um im wesentlichen Verlustreibungen zu reduzieren.

Insbesondere ist das Dichtpaket nach der Erfindung derart ausgelegt, daß dank des weiteren Segmentrings die Funktionsfähigkeit des Dichtpakets weitgehend unabhängig von Temperaturund Druckverhältnissen und somit auch gegebenenfalls von wechselnden Temperaturverhältnissen sichergestellt ist.

Nachstehend wird unter Bezugnahme auf die beigefügte Zeichnung ein bevorzugtes Ausführungsbeispiel nach der Erfindung näher erläutert. In der Zeichnung zeigt:
- Fig. 1: eine kombinierte, auseinandergezogene Darstellung der Segmentringe des Dichtpakets in perspektivischer Darstellung mit einer Zuordnung zu einem Einbaubeispiel, und
- **Fig. 2**: ein Dichtpaket üblicher Auslegungsform, welches eingangs als nächstliegender Stand der Technik gewürdigt ist.

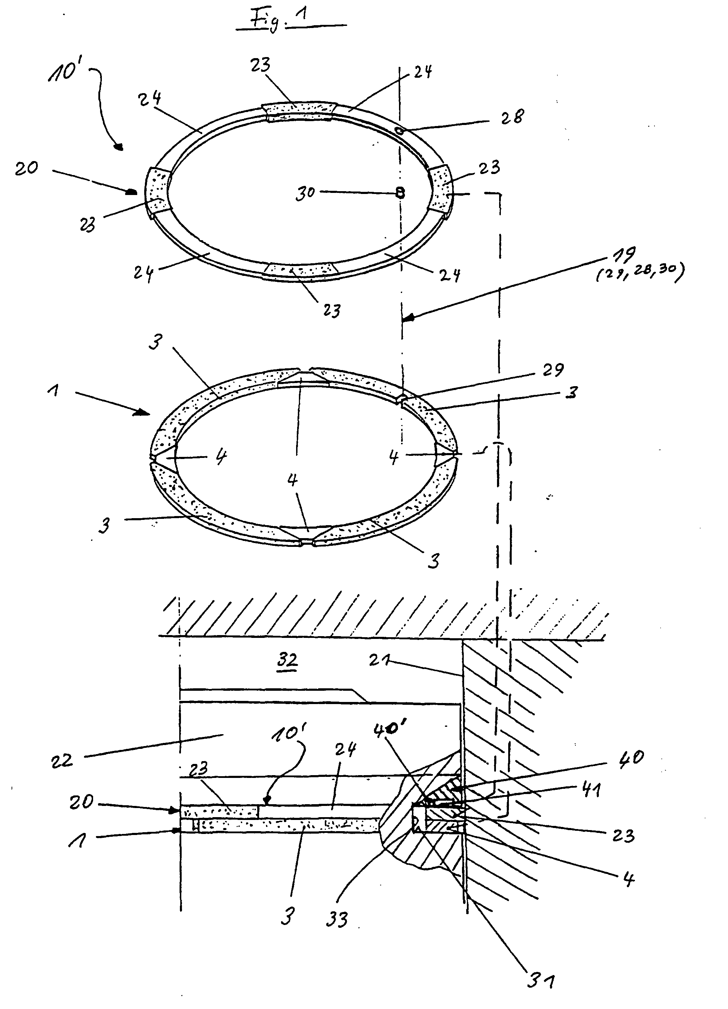

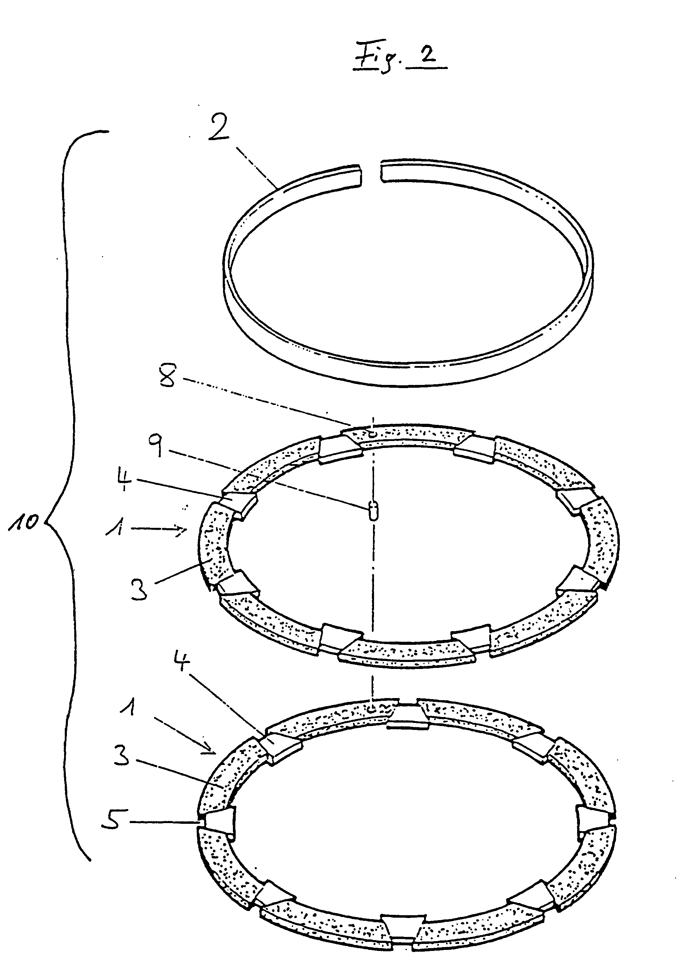

Gleiche oder ähnliche Teile des in Figur 2 gezeigten Dichtpakets sind auch in Figur 1 mit den gleichen Bezugszeichen versehen. Dies trifft insbesondere auf den ersten Segmentring 1 zu, welcher abwechselnde Dichtsegmente 3 und Schloßsegmente 4 umfaßt, welche sich entgegengesetzt radial nach innen bzw. außen keilförmig verjüngen. Bei dem in Figur 1 dargestellten Beispiel verjüngen sich die Dichtsegmente 3 radial nach innen und die Schloßsegmente 4 radial nach außen.

Das nach der Erfindung wesentliche Dichtpaket 10' nach Figur 1 umfaßt wenigstens einen weiteren Segmentring 20, welcher in abwechselnder Anordnung Dichtsegmente 23 und Schloßsegmente 24 hat. Die Schloßsegmente 24 sind gegenüber dem Außenumfang der Dichtsegmente 23 radial nach innen zurückgesetzt angeordnet. Hierdurch wird eine Berührung der Schloßsegmente 24 an einer abzudichtenden Gegendichtfläche vermieden, welche in der unteren Darstellung in Figur 1 gemäß dem Einbaubeispiel beispielsweise von einer Zylinderwand 21 einer nicht näher dargestellten Kolbenmaschine gebildet wird. Die Schloßsegmente 24 erstrecken sich über einen größeren Bogenbereich als die Dichtsegmente 23. Die Bogenerstreckungsgröße der Schloßsegmente 24 ist im wesentlichen dadurch vorgegeben, daß die Bogenerstreckung der jeweiligen Dichtsegmente 23 derart gewählt sein-muß, daß bei dem axial angrenzenden Segmentring 1 dessen Schloßsegmente 4 zuverlässig überdeckt sind. Bezogen auf die beispielsweise in Figur 1 gezeigte Kolbenachse 22 verjüngen sich die Dichtsegmente 23 und die Schloßsegmente 24 in ein und derselben Richtung, nämlich in Richtung radial nach innen. Hierdurch werden zwischen den jeweiligen Dichtsegmenten 23 und Schloßsegmenten 24 Berührungsoder Gleitflächen gebildet, welche sich keilförmig radial nach außen erweitern.

Mit 19 ist eine Verdrehsicherung insgesamt bezeichnet, welche eine Bohrung 28 in einem Schloßsegment 24 des Segmentrings 20 und eine Ausnehmung 29 im axial angrenzenden Segmentring 1, und zwar in einem Dichtsegment 3 desselben, sowie ein Justierelement, wie einen Justierstift 30, umfaßt, welcher durch die Bohrung 28 geht und in die Ausnehmung 29 im Dichtsegment 3 des Segmentrings 1 eingreift. Die Ausnehmung 29 geht von der Innenumfangsfläche des Dichtsegments 3 des Segmentrings 1 aus. Mit dieser Verdrehsicherung 19 wird die lagemäßige Zuordnung der beiden beispielhaft dargestellten Segmentringe 1 und 20 im eingebauten Zustand aufrechterhalten.

In der unteren Hälfte in Figur 1 ist als Einbaubeispiel für ein Dichtpaket 10' nach der Erfindung eine Anwendung beschrieben, bei der das Dichtpaket 10' in eine umlaufende Nut 31 eines Kolbens 22 eingelegt ist. Der Kolben 22 führt in einem Arbeitsraum 32 eine hin- und hergehende Bewegung aus, wobei der Arbeitsraum 32 von der Zylinderwand 21 begrenzt wird, gegenüber welcher eine Abdichtung mittels des Dichtpakets 10' nach der Erfindung vorzunehmen ist. Der Nutgrund der umlaufenden Nut 31 ist mit 33 bezeichnet. Hieraus ist zu ersehen, daß das Dichtpaket 10' mit eingesetzter Verdrehsicherung 19 in diese umlaufende Nut 31 derart eingesetzt ist, daß zwischen dem Nutgrund 33 und der Innenseite der Segmentringe 1 und 20 ein Zwischenraum vorhanden ist. Bei der Arbeitsbewegung des Kolbens 22 werden im Arbeitsraum 32 unterschiedliche Drücke erzeugt, die geringfügig verlustbedingt auch im Nutgrund 33 anliegen. Dank der Auslegung des Segmentrings 20 wird ermöglicht, daß die Dichtsegmente 23 desselben unter Unterstützung durch die Schloßsegmente 24 mit einem entsprechenden Anlegedruck zuverlässig gegen die Zylinderwand 21 zur Anlage gebracht werden, so daß der Arbeitsraum 32 zuverlässig abgedichtet ist. Da die beiden Segmentringe 1 und 20 aufgelöste Dichtungsgrenzen haben, werden auch die großflächigen Dichtsegmente 3 des Segmentrings 1 sicher zur Anlage an die Gegendichtfläche gebracht, sowie derart angeordnet, daß die zwischen den beiden Segmentringen 1 und 20 gebildeten aufgelösten Dichtgrenzen ebenfalls zuverlässig abgedichtet sind, so daß in zuverlässiger Weise ein erhöhter Gasdurchtritt, ein sogenannter blow-by, verhindert wird.

Wie aus dem unten in Figur 1 dargestellten Einbaubeispiel und in gebrochener Linie ferner zu ersehen ist, kann eine insgesamt mit 40 bezeichnete Sicherungseinrichtung vorgesehen sein, welche den Verbund des Dichtpakets 10' aufrechterhält und insbesondere eine Bewegung der Segmentringe 1, 20 des Dichtpakets 10' in axialer Richtung begrenzt. Da montagebedingt und unter Berücksichtigung von Wärmedehnungen im Betriebszustand ein axialer Montagespalt oder Zwischenraum unvermeidbar ist, welcher sich zwischen dem eingelegten Dichtpaket 10' und der entsprechenden Wand der umlaufenden Nut 31 ergibt, können sich resultierend aus den Massekräften und Reibkräften der Dichtsegmente 3 und 23 der Segmentringe 1, 20 mit der Zylinderwand 21 Kräfte ergeben, welche versuchen, die einzelnen Segmentabschnitte der Segmentringe in axialer Richtung aufgrund des vorhandenen Spiels zu bewegen, so daß aufgrund einer derartigen Kippbewegung sich der Dichtgrenzenverbund des Dichtpakets 10' auflösen kann. Mit Hilfe dieser Sicherungseinrichtung 40 wird die axiale Beweglichkeit der Segmentringe 1, 20 des Dichtpakets 10' eingeschränkt. Hierdurch läßt sich die Kippgefahr wesentlich reduzieren. Insbesondere kann sich die Sicherungseinrichtung 40 in Abhängigkeit vom Arbeitsdruck derart bewegen, daß der Montagespalt und das Axialspiel kleiner werden. Vorzugsweise umfaßt hierzu die Sicherungseinrichtung 40 wenigstens ein Element 40', welches sich radial zum Dichtpaket 10' bewegen kann, um den Montagespalt in axialer Richtung zu verkleinern. Wie insbesondere aus Figur 1 in der unteren Darstellung zu ersehen ist, kann die Sicherungseinrichtung 40 keilförmig ausgebildet sein, wobei der Keilwinkel in Richtung der Kolbenachse des Kolbens 22 weist. Wie dargestellt, kann die Sicherungseinrichtung 40 ringförmig ausgebildet sein. Sie kann gegebenenfalls auch in Segmente unterteilt sein. Selbstverständlich sind auch andere Ausführungsformen einer Sicherungseinrichtung 40 und hierzu gehörige Elemente 40' möglich, sofern diese Einrichtung und Elemente funktionell den Zweck erreichen, den Montagespalt in axialer Richtung zu verkleinern. Beispielsweise kommen Drahtkörper, Drahtformkörper, Kombinationen hiervon oder äquivalente Elemente in Betracht.

Die Sicherungseinrichtung 40 sowie das dazugehörige Element 40' sind ferner derart ausgelegt, daß die dem Dichtpaket 10' zugewandte Anlagefläche der Sicherungseinrichtung 40 zur axial gerichteten Druckentlastung reduziert ist. Zur Flächenreduzierung können Oberflächenunterbrechungen, wie Ausnehmungen, Entlastungsnuten 41 oder dergleichen vorgesehen sein.

Zweckmäßigerweise ist die Sicherungseinrichtung 40 zugleich derart ausgelegt, daß der auf das Dichtpaket 10' im Nutgrund 33 radial gerichtete Wirkdruck vermindert wird, was insbesondere in kombinatorischer Verbindung mit der entsprechenden Auslegung der Entlastungsnut 41 dadurch erzielt wird, daß die Durchströmungsgeschwindigkeit zum Nutgrund 33 hin mit Hilfe der Sicherungseinrichtung 40 verkleinert wird.

Selbstverständlich ist die Erfindung nicht auf das voranstehend erläuterte bevorzugte Ausführungsbeispiel beschränkt, sondern es sind zahlreiche Abänderungen und Modifikationen möglich, die der Fachmann im Bedarfsfall treffen wird, ohne den Erfindungsgedanken zu verlassen.

### Bezugszeichenliste

- 1: Segmentring
- 2: Anlegefederelement
- 3: Dichtsegment
- 4: Schloßsegment

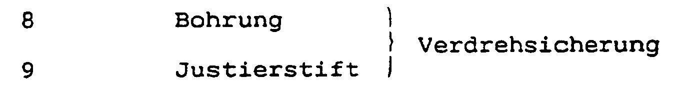

- 10: Dichtpaket in Figur 2 insgesamt
- 10': Dichtpaket in Figur 1 insgesamt
- 19: Verdrehsicherung in Figur 1 insgesamt
- 20: Segmentring
- 21: Zylinderwand
- 22: Kolben
- 23: Dichtsegment des Segmentrings 20
- 24: Schloßsegment des Segmentrings 20
- 28: Bohrung
- 29: Ausnehmung
- 30: Justierstift
- 31: Umlaufende Nut
- 32: Arbeitsraum
- 33: Nutgrund
- 40: Sicherungseinrichtung insgesamt
- 40': axial bewegliches Element der Sicherungseinrichtung 40
- 41: Entlastungsnut (Ausnehmung)

## Patentansprüche

1. Dichtpaket, insbesondere für Hubkolbenmaschinen, welches vorzugsweise in eine umlaufende Nut (31) eines Hubkolbens (22) derselben einlegbar ist, welches wenigstens zwei axial aneinanderliegende Segmentringe (1, 20) aufweist, die jeweils mindestens zwei Dichtsegmente (3; 23) und zur Vermeidung eines Aneinanderstoßens der Dichtsegmente abwechselnd dazwischen angeordnete Schloßsegmente (4; 24) aufweisen, wobei sich die Dichtsegmente (3) und die Schloßsegmente (4) wenigstens eines ersten Segmentringes (1) entgegengesetzt radial nach innen bzw. außen keilförmig verjüngen und die Schloßsegmente (4; 24) gegenüber dem Dichtbereich der Dichtsegmente (3; 23) radial zurückgesetzt sind, und das Dichtpaket ferner eine zwischen den mindestens zwei Segmentringen (1, 20) wirkende Verdrehsicherung (19) aufweist, **dadurch gekennzeichnet, daß** sich die abwechselnden Schloß- und Dichtsegmente (24, 23) des wenigstens einen weiteren Segmentrings (20) beide radial nach innen verjüngen, sich die Schloßsegmente (24) über einen wesentlich größeren Bogenbereich als die Dichtsegmente (23) erstrecken, und daß die Dichtsegmente (23) dieses weiteren Segmentrings (20) die Schloßsegmente (4) des axial angrenzenden ersten Segmentrings (1) des Dichtpakets (10') überdecken.

2. Dichtpaket nach Anspruch 1, **dadurch gekennzeichnet, daß** die Verdrehsicherung (19) eine Zusammenwirkungsverbindung mit wenigstens einem Schloßsegment (24) des weiteren Segmentrings (20) und einem Dichtsegment (3) des ersten Segmentrings (1) herstellt.

3. Dichtpaket nach Anspruch 2, **dadurch gekennzeichnet, daß** die Verdrehsicherung (19) ein Justierelement, wie einen Justierstift (30), umfaßt, welches durch eine Bohrung (28) im Schloßsegment (24) geht und mit einer Ausnehmung (29) am Dichtsegment (3) des axial angrenzenden ersten Segmentrings (1) zusammenarbeitet.

4. Dichtpaket nach Anspruch 3, **dadurch gekennzeichnet, daß** die Ausnehmung (29) vom Innenumfang des Dichtsegments (3) ausgeht.

5. Dichtpaket nach einem der vorangehenden Ansprüche, **dadurch gekennzeichnet, daß** jeder Segmentring (1; 20) vier Schloßsegmente (4; 24) und vier Dichtsegmente (3; 23) umfaßt, wobei der Verjüngungswinkel der Schloßsegmente (24) und der Dichtsegmente (23) des wenigstens einen weiteren Segmentrings (20) etwa 45° beträgt.

6. Dichtpaket nach einem der voranstehenden Ansprüche, **gekennzeichnet durch** eine Sicherungseinrichtung (40) für den Verbund des Dichtpakets (10'), welche insbesondere eine Bewegung der Segmentringe (1, 20) des Dichtpakets (10') in axialer Richtung begrenzt.

7. Dichtpaket nach Anspruch 6, **dadurch gekennzeichnet, daß** die Sicherungseinrichtung (40) arbeitsdruckabhängig den zum Einlegen des Dichtpakets erforderlichen Montagespalt insbesondere in axialer Richtung zu verkleinern sucht.

8. Dichtpaket nach Anspruch 6 oder 7, **dadurch gekennzeichnet, daß** die Sicherungseinrichtung (40) wenigstens ein sich radial zum Dichtpaket (10') bewegliches Element (40') umfaßt.

9. Dichtpaket nach einem der Ansprüche 6 bis 8, **dadurch gekennzeichnet, daß** die Sicherungseinrichtung (40) keilförmig in Richtung der Kolbenachse des Kolbens (22) ausgebildet ist.

10. Dichtpaket nach einem der Ansprüche 6 bis 9, **dadurch gekennzeichnet, daß** die Sicherungseinrichtung (40) ringförmig ausgebildet ist und vorzugsweise in Segmente unterteilt ist.

11. Dichtpaket nach einem der Ansprüche 6 bis 10, **dadurch gekennzeichnet, daß** die dem Dichtpaket (10') zugewandte Anlagefläche der Sicherungseinrichtung (40) zur axial gerichteten Druckentlastung reduziert ist.

12. Dichtpaket nach Anspruch 11, **dadurch gekennzeichnet, daß** die dem Dichtpaket (10') zugewandte Anlagefläche Oberflächenunterbrechungen, wie Ausnehmungen, Entlastungsnuten (41) oder dergleichen hat.

13. Dichtpaket nach einem der Ansprüche 6 bis 12, **dadurch gekennzeichnet, daß** die Sicherungseinrichtung (40) zugleich den radial gerichteten Wirkdruck auf das Dichtpaket (10') im Nutgrund (33) herabsetzt.

14. Dichtpaket nach Anspruch 13, **dadurch gekennzeichnet, daß** die Sicherungseinrichtung (40) den Durchströmungsquerschnitt zum Nutgrund (33) verkleinert.

## Claims

1. A packing seal, in particular for reciprocating piston engines, which preferably can be placed into a circumferential groove (31) of a piston (22) thereof, which has at least two axially adjacent segment rings (1, 20) that each have at least two sealing segments (3, 23) and, to avoid an abutting of the sealing segments, have locking segments (4; 24) arranged between them in alternating order, whereby the sealing segments (3) and the locking segments (4) of at least a first segment ring (1) taper wedge-shaped in opposite directions radially inward and outward, respectively, and the locking segments (4; 24) are set back radially relative to the sealing area of the sealing segments (3; 23), and the packing seal furthermore has a torsion protection (19) acting between the at least two segment rings (1, 20), **characterized in that** the alternating locking and sealing segments (24, 23) of the at least one additional segment ring (20) both taper radially inward, the locking segments (24) extend over a substantially larger arc area than the sealing segments (23), and that the sealing segments (23) of this additional segment ring (20) overlay the lock elements (4) of the axially adjacent first segment ring (1) of the packing seal (10').

2. A packing seal according to claim 1, **characterized in that** the torsion protection (19) produces an interaction bond with at least one locking segment (24) of the additional segment ring (20) and one sealing segment (3) of the first segment ring (1).

3. A packing seal according to claim 2, **characterized in that** the torsion protection (19) comprises an adjusting element such as an adjusting pin (30) which runs through a bore (28) in the locking segment (24) and works together with a recess (29) on the sealing segment (3) of the axially adjacent first segment ring (1).

4. A packing seal according to claim 3, **characterized in that** the recess (29) originates from the inner circumference of the sealing segment (3).

5. A packing seal according to claim 1, **characterized in that** each segment ring (1; 20) comprises four locking segments (4; 24) and four sealing segments (3; 23), whereby the taper angle of the locking elements (24) and the sealing elements (23) of the at least one additional segment ring (20) is roughly 45°.

6. A packing seal according to claim 1, **characterized by** a securing device (40) for the bond of the packing seal (10'), which limits in axial direction in particular a motion of the segment rings (1, 20) of the packing seal (10').

7. A packing seal according to claim 6, **characterized in that** the securing device (40) seeks to decrease particularly in axial direction, and dependent upon working pressure, the assembly gap required for inserting the packing seal.

8. A packing seal according to claim 6, **characterized in that** the securing device (40) comprises at least one element (40') movable radially relative to the packing seal (10').

9. A packing seal according to claim 6, **characterized in that** the securing device (40) is designed wedge-shaped in the direction of the piston axis of the piston (22).

10. A packing seal according to claim 6, **characterized in that** the securing device (40) is designed annular and is preferably subdivided into segments.

11. A packing seal according to claim 6, **characterized in that** the securing device's (40) support surface facing the packing seal (10') is reduced for axially directed relief from pressure.

12. A packing seal according to claim 11, **characterized in that** the securing device's (40) support surface facing the packing seal (10') has surface interruptions such as recesses, relief grooves (41) or the like.

13. A packing seal according to claim 6, **characterized in that** the securing device (40) at the same time reduces the radially directed effective pressure on the packing seal (10') in the groove base (33).

14. A packing seal according to claim 13, **characterized in that** the securing device (40) reduces the flow cross-section to the groove base (33).

## Revendications

1. Ensemble hermétique, en particulier pour machines à piston, qui peut par exemple être installé dans une rainure circulante (31) d'un piston (22) de cette machine, et qui contient au moins deux anneaux segmentés (1,20) superposés, qui comptent chacun au moins deux segments hermétiques (3,23), et entre ceux-ci des segments de fermeture (4,24) destinés à éviter le contact des segments hermétiques. Les segments hermétiques (3) et de fermeture (4) d'un minimal premier anneau segmenté sont disposés tête-bêche radialement vers l'intérieur ou l'extérieur respectivement et sont de forme trapézoïdale ; les segments de fermeture (4,24) sont disposés au-dessus ou en-dessous des domaines étanches des segments hermétiques (3,23) radialement. L'ensemble hermétique contient de plus entre les deux anneaux segmentés minimaux (1,20) une sécurité anti-rotationelle (19). **Il se reconnaît à ce que** les segments alternés de fermeture (24), et hermétiques (23) du minimal anneau supplémentaire (20) se joignent radialement, que les segments de fermeture (24) s'étendent sur une surface d'arc sensiblement plus grosse que celle des éléments hermétiques (23), et que les segments hermétiques (23) de cet anneau segmenté supplémentaire (20) recouvrent les segments de fermeture (4) de l'anneau segmenté limitant (1) de l'ensemble hermétique (10').

2. Ensemble hermétique correspondant aux exigences de 1, et **qui se reconnaît à ce que** la sécurité anti-rotationnelle (19) assure une liaison efficace de solidarisation entre au moins un segment de fermeture (24) de l'anneau segmenté supplémentaire, et du segment hermétique (3) du premier anneau segmenté (1).

3. Ensemble hermétique correspondant aux exigences de 2, et **qui se reconnaît à ce que** la sécurité anti-rotationnelle (19) contient un élément d'ajustage, comme une cheville d'ajustage (30), qui, à travers un trou (28) pratiqué dans un segment de fermeture (24) s'enfiche dans une encoche (29) d'un segment hermétique (3) du premier anneau axial segmenté (1) limitant.

4. Ensemble hermétique correspondant aux exigences de 3, et **qui se reconnaît à ce que** l'encoche (29) démarre du côté intérieur du segment hermétique (3).

5. Ensemble hermétique correspondant à l'un des précédents, et **qui se reconnaît à ce que** chaque anneau segmenté (1,20) se constitue de quatre segments de fermeture (4,24), et quatre segments hermétiques (3,23), pour lesquels l'angle de liaison d'un segment de fermeture (24) et d'un segment hermétique (23) du minimal anneau supplémentaire (20) est d'environ 45°.

6. Ensemble hermétique correspondant à l'un des précédents, et **qui se reconnaît** par un assemblage de sécurité (40) pour la cohésion de l'ensemble hermétique (10'), et qui en particulier limite le mouvement des anneaux segmentés (1,20) de l'ensemble hermétique (10') dans une direction axiale.

7. Ensemble hermétique correspondant à 6, et **qui se reconnaît à ce que** l'assemblage de sécurité (40) s'efforce de limiter axialement en fonction de la pression de travail, l'espace de montage nécessaire à l'ensemble hermétique (10').

8. Ensemble hermétique correspondant à 6 ou à 7 et **qui se reconnaît à ce que** l'assemblage de sécurité (40) contient au moins un élément radial mobile (40') par rapport à l'ensemble hermétique (10').

9. Ensemble hermétique correspondant à l'un de ceux de 6 à 8 inclus, et **qui se reconnaît à ce que** l'assemblage de sécurité (40) est usiné de façon trapézoïdale dans la direction de l'axe du piston (22).

10. Ensemble hermétique correspondant à l'un de ceux de 6 à 9 inclus, et **qui se reconnaît à ce que** l'assemblage de sécurité (40) est annulaire et de préférence découpé en segments.

11. Ensemble hermétique correspondant à l'un de ceux de 6 à 10 inclus et **qui se reconnaît à ce que** la surface de contact de l'assemblage de sécurité (40) avec l'ensemble hermétique (10') est réduite dans le sens des pressions axiales.

12. Ensemble hermétique correspondant à 11, et **qui se reconnaît à ce que** la surface de contact inférieure de l'assemblage de sécurité (40) avec l'ensemble hermétique (10') comporte des interruptions comme des rainures d'allègement (41), des encoches, ou autres choses analogues.

13. Ensemble hermétique correspondant à l'un de ceux de 6 à 12 inclus, et **qui se reconnaît à ce que** l'assemblage de sécurité (40) diminue en même temps les effets des pressions radiales sur l'ensemble hermétique (10') dans le fond de la rainure (33).

14. Ensemble hermétique correspondant à 13, et **qui se reconnaît à ce que** l'assemblage de sécurité réduit les transferts de gaz dans le fond de la rainure (33).
